# FASCICULE DE BREVET EUROPEEN

(11) **EP 3 069 352 B1**
(45) Date de publication et mention de la délivrance du brevet: **31.01.2018**
(21) Numéro de dépôt: 14806689.7
(22) Date de dépôt: 14.11.2014
(51) Int. Cl.: G21B 1/13

(54) **COMPOSANT A GEOMETRIE VARIABLE POUR UNE STRUCTURE A GRANDE DIMENSION ET PROCEDE D'ASSEMBLAGE**
KOMPONENTE MIT VARIABLER GEOMETRIE FÜR EINE GROSSE STRUKTUR UND MONTAGEVERFAHREN
COMPONENT WITH VARIABLE GEOMETRY FOR A LARGE STRUCTURE AND ASSEMBLY METHOD

(30) Priorité: 15.11.2013 FR 1302625
(43) Date de publication de la demande: 21.09.2016
(73) Titulaire: Atmostat, 94800 Villejuif (FR); Commissariat à l'Énergie Atomique et aux Énergies Alternatives, 75015 Paris (FR)
(72) Inventeur: BUCCI, Phillipe, F-94815 Villejuif Cedex (FR); CONCHON, Denis, F-94815 Villejuif Cedex (FR)
(74) Mandataire: Brevalex
(86) Numéro de dépôt international: PCT/FR2014/000242
(87) Numéro de publication internationale: WO 2015/071554

(56) Documents cités:
- EP-A2- 0 117 136
- WO-A1-2013/017749
- GB-A- 1 418 319
- US-A1- 2012 250 812

## Description

La présente invention est relative à un composant à géométrie variable d'une structure à grande dimension, ledit composant étant destiné à être soumis à une multiplicité de flux thermiques et/ou un flux de particules de grande énergie pouvant atteindre au moins un mégawatt par mètre carré (1 MW/m²) et à supporter une multiplicité de contraintes mécaniques et/ou thermiques.

Elle concerne plus particulièrement un composant d'une paroi d'un réacteur pouvant produire un flux thermique supérieur à quelque mégawatt, notamment une paroi d'un réacteur de fusion nucléaire et/ou thermonucléaire.

L'invention concerne également un procédé économique de fabrication d'un tel composant à géométrie variable.

Les réacteurs, notamment de fusion thermonucléaire, comprennent généralement une chambre à vide recouverte par des composants de première paroi qui sont directement en regard du plasma. Leur rôle est de protéger du rayonnement thermique et du flux neutronique le personnel travaillant proche dudit réacteur et les installations nucléaires entourant la chambre à vide. C'est pour cette raison que ces chambres doivent être conçues avec des composants ayant une structure complexe et des propriétés thermomécaniques spécifiques.

La conception et/ou la fabrication des composants pour ces réacteurs sont coûteuses et il est difficile d'entretenir une production en chaine desdits composants. Egalement, la géométrie desdits réacteurs est extrêmement complexe (exemple une géométrie toroïdale ou torocylindrique). C'est pour cette raison que ces composants sont fabriqués sur-mesure afin reproduisant au plus près la géométrie desdits réacteurs.

Pour diminuer le coût de la fabrication desdits composants, il est important réduire le temps de montage et les surcouts associés, éviter les surcouts liés aux rebuts dans le cas d'un défaut de fabrication pour un composant complet, améliorer le comportement mécanique et la résistance aux forts flux thermiques ou à un flux de particules de grande énergie, et permettre une simplicité de fabrication desdits composants sur une chaine de montage adaptée pour un réacteur à géométrie complexe. De nombreuses études ont été réalisées, malheureusement les résultats de ces études sont difficilement exploitables et comparables entre eux car, bien souvent, les maquettes de tests ont des dimensions et des conditions de tenues aux contraintes mécaniques et thermiques et aux forts flux de chaleur peu connues et/ou différentes. De plus, les réacteurs ont souvent des géométries variables et complexes, par exemple une géométrie toroïdale ou torocylindrique, rendant son montage difficile et/ou augmentant son temps de montage. Il est par conséquent difficile d'apprécier l'amélioration apportée par la réalisation des composants décrits dans l'état de la technique.

De la publication WO 2013 017749 est connue un composant de première paroi pour un réacteur de fusion nucléaire muni d'un empilement comprenant successivement un élément en alliage de cuivre, une couche intercalaire métallique et un élément en béryllium directement en contact avec la couche intercalaire métallique, ledit composant étant résistant au fort flux de chaleur et aux fortes contraintes thermomécaniques.

Malheureusement, ledit composant est en une seule pièce, ce qui rend difficile la gestion des risques liés à la fabrication et à la définition d'une géométrie particulière (complexe) relative au réacteur. De plus, lors de la fabrication dudit composant, si une des parties dudit composant présente un défaut, c'est naturellement tout le composant qui présente ce défaut, ce qui conduit à un surcoût de fabrication. Egalement, lors de leur assemblage dans le réacteur, il est possible, compte tenu de la complexité de la géométrie des réacteurs, notamment de fusion thermonucléaire, que les risques et les défauts de géométrie ne soient pas gérés.

De la publication EP 0 117 136 est connu un composant comprenant une pluralité d'éléments élémentaires en céramique poreuse lesquels sont soudé à haute température sur un support métallique de grande dimension. Cette céramique permet de retenir le lithium métal qui permet d'une part de stabiliser le plasma et de refroidir les composant et d'autre part, d'avoir un faible numéro atomique afin de limiter la pollution du plasma mais également de produire in situ le tritium nécessaire à la réaction de fusion. Malheureusement, ce dispositif n'est pas un concept modulaire car sa géométrie ne peut être adaptée avec une géométrie complexe de type toroïdale ou torocylindrique habituellement utilisée dans les réacteurs de fusion thermonucléaire. De plus, les éléments élémentaires ne sont assemblés et soudé entre eux pour obtenir une liaison atomique directe entre les éléments, mais assemblé et soudé sur un support de taille comparable à une paroi. Ce support conduit à un surcoût de fabrication et rend difficile la gestion de risques liés aux défauts de géométrie. En effet, l'absence de liaison entre élément élémentaire conduit à la création des plasmas secondaires et/ou des arc-électriques perturbant le plasma central. De plus, chaque élément élémentaire est fait en un seul matériau, notamment en céramique, et ne comprend pas un empilement de couche de matériaux comprenant au moins une couche de béryllium, qui est nécessaire pour la survie du plasma du fait de son faible numéro atomique.

De la publication GB 1 418 319 est connu un composant pour un réacteur de fusion formé par assemblage d'un certain nombre de module identique. Chaque module est constitué d'un seul matériau. Ce dispositif est destiné à faire circuler du lithium avec un refroidissement hélium et est nécessaire pour la production et la récupération de lithium in situ nécessaire aux réactions de fusion. Malheureusement, ledit composant ne comprend pas un empilement de couche de matériaux comprenant au moins une couche de béryllium, qui est nécessaire pour la survie du plasma du fait de son faible numéro atomique.

De la publication US 2012 0250812 est connu un composant (230) pour un réacteur de fusion en carbure de silicium assemblées par brasage à une structure métallique à l'intérieur de laquelle circule un fluide caloporteur. Ce composant comprend 80% de carbure de silicium et 20% d'oxyde de béryllium. Malheureusement, ce composant est dépourvu d'une structure modulaire.

De la publication EP 0 856 374 est connu un composant comprenant une couche pliante en cuivre et une tuile de béryllium assemblée par soudage diffusion. Ledit composant comprend en outre une couche de protection déposée par PVD afin d'améliorer les priopriétés mécanique et la tenue sous haut flux thermique. Malheureusement, ce composant est dépourvu d'une structure modulaire.

Aucun des documents de l'état de la technique ne propose un composant pour un réacteur de fusion capable de supporter de fort flux thermique en associant le coût de la fabrication, les performances dudit composant, la gestion de risque liée aux rebuts des pièces, le temps de montage dudit composant et la complexité de la géométrie (toroïdale ou torocylindrique).

La présente invention vise donc à remédier à ces inconvénients. Plus particulièrement, la présente invention vise à proposer et à réaliser un composant à géométrie variable d'une structure de grande dimension notamment un réacteur de fusion thermonucléaire, destiné à être soumis à une multiplicité de flux thermiques et/ou un flux de particules de grande énergie, pouvant atteindre au moins 1 MW/m² et à supporter une multiplicité de contraintes mécaniques et/ou thermiques remédiant aux problèmes précédemment évoqués pour mieux gérer les risques liés à l'assemblage desdits composants, à leur complexité géométrique (toroïdale ou torocylindrique), au temps de montage et aux surcoûts de fabrication.

A la lecture de la description qui suit, les termes suivants auront les définitions suivantes :
- Soudage diffusion : C'est une technique d'assemblage permanent à l'état solide, qui consiste à se servir du phénomène de diffusion des atomes pour créer une liaison forte entre deux éléments disposés côte à côte ou l'un à côté de l'autre ou l'un au regard de l'autre. Elle se fait soit par compression isostatique à chaud ou par compression uniaxiale, l'objectif étant d'assurer la continuité de la matière à assembler.
- Couche de matériau : ensemble plus ou moins homogène compris entre deux surfaces sensiblement parallèles caractérisées par une épaisseur et éventuellement une longueur et/ou largeur.
- Eléments élémentaires ou modulaires : briques élémentaires de plus petite taille, creuses et/ou pleines caractérisées par une épaisseur et/ou une longueur et/ou une largeur et notamment par une géométrie.
- Flux thermiques ou flux de chaleur : quantité de chaleur reçue par un corps ou un composant par unité de temps. Pour la présente invention, le flux de chaleur est compris entre 0,5 MW/m² et 10 MW/m².
- Particules de grandes énergies : électrons, ions, neutrons, gammas ou photons, rayon X, les positrons, les protons, les alphas, etc.
- Contraintes mécaniques : contrainte résultant de la considération des forces intérieures qui naissent dans un composant lorsqu'on le déforme mécaniquement.
- Contraintes thermiques : contrainte résultant de la considération des forces intérieures qui naissent dans un composant lorsqu'on le déforme thermiquement.
- Empilement : disposition compacte des couches de matériaux les unes après les autres et/ou les unes à côté des autres et/ou les unes sur les autres dans un composant afin d'avoir la plus grande résistance dudit composant aux contraintes mécaniques et thermiques.
- Composant : structure d'au moins 50 cm de large et/ou d'au moins 1 m² de surface.

L'invention a pour objet un composant pour une structure de grande dimension, notamment pour un réacteur de fusion thermonucléaire, destiné à être soumis à une multiplicité de flux thermiques et/ou un flux de particules de grande énergie, pouvant atteindre quelque mégawatt par mètre carré, notamment au moins 0,5 MW/m² ou 1 MW/m², et à supporter une multiplicité de contraintes mécaniques et/ou thermiques. Ledit composant est principalement constitué par un assemblage d'une multiplicité d'éléments élémentaires de plus petite taille d'au moins 1/100 de la taille dudit composant, assemblés par soudage diffusion, chaque élément élémentaire étant muni d'un empilement comprenant une multiplicité de couches de matériaux incluant au moins une couche de béryllium.

Avantageusement, les éléments élémentaires ont une taille comprise entre 1/100 et 1/10 de la taille du composant.

Selon différentes caractéristiques de l'invention, les éléments élémentaires sont à géométrie sensiblement identique ou diverse et/ou multiple.

Selon d'autres caractéristiques de l'invention, au moins un élément élémentaire comprend au moins un moyen destiné à l'écoulement d'un fluide et/ou au transport de l'écoulement de pression et/ou à l'échange de l'énergie au travers une paroi.

Préférentiellement, au moins un élément élémentaire comprend au moins un circuit hydraulique et au moins un moyen d'obturation.

Avantageusement, le composant selon l'invention comprend en outre au moins un moyen support comprenant au moins un moyen de canalisation et au moins un moyen d'interconnexion, ledit moyen support étant soudé aux éléments élémentaires.

Avantageusement, un réacteur, notamment de fusion thermonucléaire comprend une couverture en matériaux, ladite couverture comprend une multiplicité de composants selon l'invention.

L'invention a également pour objet un procédé d'assemblage d'un composant l'invention ledit procédé comprenant les étapes successives suivantes :
- découper au moins une structure (6) d'au moins 1 m² munie d'au moins une couche de matériaux (3),
- réaliser, par empilement d'une multiplicité de couches de matériaux (3), un élément élémentaire (4) de plus petite taille d'au moins 1/100 de la taille de ladite structure (6),
- Réunir lesdits éléments élémentaires (4) côte à côte pour définir une géométrie choisie,
- assembler par soudage par diffusion lesdits éléments élémentaires (4) suivant la géométrique choisie pour former un composant (1) de taille inférieure ou égale à la taille de la structure (6).

Avantageusement, le procédé d'assemblage selon l'invention comprend en outre une étape consistant à pré-assembler les couches de matériaux de l'empilement par soudage diffusion de sorte à former des liaisons fortes entre les couches de matériaux de l'empilement.

Avantageusement, un test d'étanchéité est réalisé après le procédé de soudage diffusion des éléments élémentaires, et une reprise d'usinage suivi d'un nettoyage sont également réalisés.

Avantageusement, les éléments élémentaires sont être usinés de façon à leur donner une forme choisie pour créer des connexions entre les moyens, lesquelles permettront à un fluide d'être véhiculer dans chaque élément élémentaire.

Avantageusement, le procédé selon l'invention comprend une étape supplémentaire consistant à l'assemblage d'au moins une couche de béryllium.

D'autres caractéristiques et avantages de l'invention pris seul ou en combinaison, apparaîtront à la lecture de la description détaillée qui suit pour la compréhension de laquelle on se reportera aux dessins annexés dans lesquels :
- la figure 1 est une représentation schématique d'une structure définissant un composant d'une paroi interne correspondant à la première paroi d'un réacteur ;
- la figure 2 est une représentation schématique d'un composant de géométrie variable objet de la présente invention ;
- la figure 3 est une représentation schématique d'un élément élémentaire constituant le composant de géométrie variable objet de la présente invention.

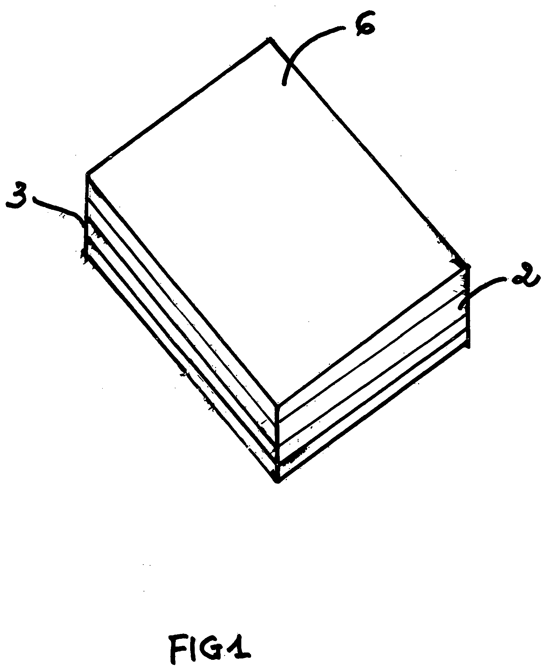

En référence à la figure 1, une structure (6), de quelques centimètres carrés, notamment d'au moins 1 mètre carré (m²) d'un composant (1) de première paroi d'un réacteur, notamment de fusion thermonucléaire. Cette structure (6) comprend au moins une couche de matériaux et dans certains cas, est muni d'un empilement comprend une multiplicité de couches (3) de matériaux incluant au moins une couche de béryllium (2).

Particulièrement ladite structure (6) comprend un empilement d'au moins trois couches de matériaux incluant une couche de béryllium.

Les épaisseurs des couches de matériaux sont choisies en fonction de la nature des contraintes mécaniques et/ou thermiques subit par le composant (1), et notamment en fonction de flux thermiques et/ou des particules (les particules d'énergie supérieure à 30 kilo électronvolts). Un modèle calcul de structure de matériaux, tenant compte de la structure de matériau et de la nature des contraintes et des flux reçus par ledit matériau, permet de déterminer les épaisseurs des couches de matériaux nécessaires pour constituer le composant (1).

L'empilement comprend notamment, une couche de matériau en alliage de cuivre, une couche de matériaux en acier austénitique, un circuit de refroidissement, intercalaire métallique constituée d'un métal de transition mou et ductile sur lequel un intercalaire en nickel est disposé.

Dans certains cas, la couche réductrice des contraintes mécaniques peut être en cuivre et l'empilement peut comporter entre autre une couche intercalaire additionnelle, constituée par un alliage de nickel et de cuivre, disposée entre la couche intercalaire métallique et la couche réductrice des contraintes mécaniques. Avantageusement, l'alliage de cuivre peut être un alliage comprenant le cuivre, le chrome et le zirconium.

Les différentes couches constituant l'empilement sont assemblées par soudage diffusion pour établir des liaisons fortes entre les couches métalliques. En effet, le soudage diffusion permet de d'assembler les couches métalliques de manière permanente à l'état solide. Le soudage diffusion utilisé pour l'assemblage des couches est le soudage diffusion assisté par compression isostatique à chaud ou par compression uniaxiale de sorte à assurer la continuité de la matière à assembler.

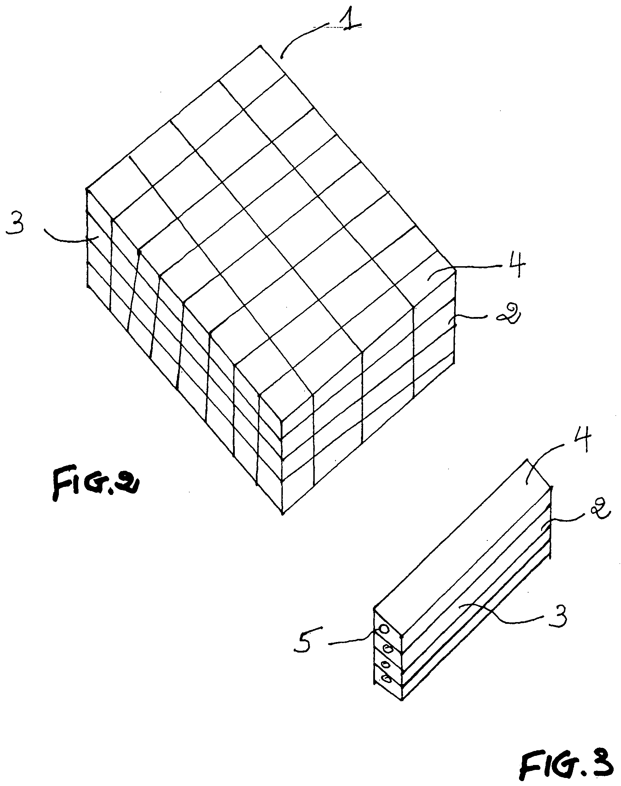

En référence à la figure 2, au moins une structure (6), d'au moins 1 m², notamment plusieurs structure (6) de nature diverse, munie d'au moins une couches (3) de matériaux, est coupée en plusieurs morceaux de taille d'au moins 1/100 de sa taille. Ces morceau sont ensuite réuni puis assemblé pour former un élément élémentaire (4) tel que représenté sur la figure 3. Chaque élément élémentaire (4) peut être traité individuellement pour améliorer les performances physico-chimiques, notamment thermiques et thermomécaniques. Lesdits éléments élémentaires (4), y compris les couches de matériaux les constituants, sont réunis les uns à côté des autres ou les uns sur les autres, notamment côte à côte, pour définir une géométrie choisie en fonction de l'application et/ou de la géométrie de la structure de destination. Par exemple, pour les réacteurs de fusion de type tokamak, de géométrie toroïdale, la structure de destination est une couverture intérieure dont la géométrie peut être définie par une forme torique. Lesdits éléments élémentaires (4) sont ensuite assemblés suivant un procédé de soudage par diffusion suivant la géométrie de la structure de destination définie pour former une autre structure nouvelle de taille relativement différente de la taille de la structure (6) de départ, notamment une taille inférieure ou égale à la taille de la structure (6). Cette nouvelle structure formée est appelée composant (1). Ce composant (1) peut avoir une géométrie variable.

Le composant (1) est destiné à former une structure de grande dimension, notamment un système de couverture (première paroi) d'un réacteur, notamment d'un réacteur de fusion thermonucléaire. Le composant (1) est destiné à être soumis à une multiplicité de flux thermiques et/ou un flux de particules de grande énergie, pouvant atteindre quelque mégawatt par mètre carré, notamment au moins 0,5 MW/m² ou 1 MW/m², et surtout à supporter une multiplicité de contraintes mécaniques et/ou thermiques.

Le composant (1) est muni d'un empilement comprenant une multiplicité de couches (3) de matériaux incluant au moins une couche de béryllium (2). Le composant (1) est principalement constitué par un assemblage d'éléments élémentaires (4) de plus petite taille d'au moins 1/100 de la taille dudit composant (1), réunis côte à côte et/ou les uns à côté des autres et assemblé suivant un procédé de soudage par diffusion atomique. Chaque élément élémentaire est muni d'un empilement comprenant une multiplicité de couches (3) de matériaux incluant au moins une couche de béryllium (2). Les différentes couches de matériaux (3) sont assemblées par soudage diffusion.

Dans la présente invention, le terme « taille d'au moins 1/100 » correspond à la taille minimale que peut avoir un élément élémentaire (1) car, en deçà de cette taille, il est difficile d'intégrer dans l'élément élémentaire, un circuit de refroidissement. Toutefois, la taille des éléments élémentaires (3) est inférieure à 1/5 car il faut plusieurs morceaux d'éléments élémentaires (3) pour constituer le composant (1).

Avantageusement, les éléments élémentaires (4) ont une taille comprise entre 1/100 et 1/10 de la taille du composant (1).

Selon l'invention, le composant (1) comprend 20 éléments élémentaires de taille diverse ou homogène.

Selon d'autres caractéristiques de l'invention, le composant (1) est formé par l'assemblage de 100 éléments élémentaires (3), de préférence 50 éléments élémentaires (3).

L'assemblage du composant (1) se fait principalement en deux étapes. La première étape, encore appelé l'étape de pré-assemblage, consiste à assembler les couches de matériaux (3) par empilement pour définir un élément élémentaire (4). Ce pré-assemblage des couches de matériaux (3) se fait par soudage diffusion assisté par compression isostatique à chaud (CIC) ou par soudage uniaxiale pour former des liaisons fortes entre les couches de matériaux (3) assemblées.

La deuxième étape ou étape de finalisation, consiste à assembler les éléments élémentaires (4), par soudage diffusion, uniaxial ou assisté par compression isostatique à chaud, pour former un composant (1).

Cet assemblage en deux étapes permet de réduire les temps de montage et les coûts associés, mais également de réduire les coûts liés au rebut des éléments élémentaires si un défaut est constaté. Par exemple, si un composant (1) est fabriqué avec 20 éléments élémentaires (4) et si le 20eme élément élémentaire présente un défaut, c'est ce 20eme élément élémentaire qui va être rebuté et le reste des 19 éléments élémentaires sont conservés.

Ce procédé en deux étapes permet également de réduire l'oxydation des éléments élémentaires et/ou des couches de matériaux. En effet, tous les éléments élémentaires (4) et/ou couches de matériaux (3) constituants lesdits éléments élémentaires (4) sont soudés par diffusion assisté par de compaction isostatique à chaud dans une enceinte en une fois, avec un temps d'assemblage réduit, ce qui permet de conserver les propriétés thermique et thermomécaniques des matériaux constituant le composant (1).

Cette fabrication en deux étapes présente également l'avantage d'avoir un taux de défaillance faible, car très peu de complexité ou de séquences d'assemblages sont réalisés avec des gestes simples.

Le procédé de soudage par diffusion atomique est largement décrit dans l'état de la technique. Il consiste notamment à se servir du phénomène de diffusion des atomes pour créer une liaison. Si ce procédé ne présente généralement pas l'avantage d'une grande productivité, il présente bien d'autres avantages liés à l'absence de microporosité et de ségrégation, à l'absence de discontinuités, à l'absence de déformation massive et quasi-absence de contraintes résiduelles et donc possibilité d'un assemblage de précision. Ce procédé de soudage diffusion présente également des avantages liés au haut niveau de résistance mécanique de l'interface (contrainte à rupture en général supérieure égale à la contrainte à rupture du moins résistant des matériaux de l'assemblage).

Toutes les couches de matériaux et tous les éléments élémentaires (4) assemblés par soudage diffusion sont soumis au même cycle thermomécanique. Il peut donc être nécessaire de compléter ou de refaire le traitement thermique.

Dans le cas d'un réacteur de fusion thermonucléaire, le système de couverture est constitué par une multiplicité de composants (1). Le composant (1) formé selon l'invention confère au plasma une limite physique tout en contribuant à la protection thermique et nucléaire de la chambre à vide et du composant externe (première paroi) de la machine. Le composant (1) constitue donc un composant (1) de première paroi d'un réacteur, notamment de fusion thermonucléaire ou d'un réacteur susceptible de libérer des flux de chaleur considérable de plus de 1 MW/m². Face au plasma ultra-chaud et soumis à des forces électromagnétiques élevées interagissant avec les principaux systèmes et composants du réacteur, la couverture comprend une multiplicité de composants (1). Chaque composant (1) est formé par un assemblage d'éléments élémentaires (4) soudés suivant un procédé de soudage par diffusion notamment assisté par compression isostatique à chaud (CIC). Le composant (1) est sans conteste le composant le plus critique d'un réacteur, notamment de fusion thermonucléaire et techniquement le plus délicat.

Pour garantir la présence du béryllium face plasma, la couche en béryllium est assemblée en dernier par soudage diffusion assisté par compression isostatique à chaud. Cette étape supplémentaire confère au composant (1), une structure propre de sorte à éviter toute sorte de pollution du plasma dans le réacteur.

Selon d'autres caractéristiques de l'invention, le composant (1) mesure 1 mètre x 1,5 mètre et pèse jusqu'à 4.5 tonnes. Ces dimensions exigent non seulement un système de télémanipulation particulièrement sophistiqué en prévision des opérations de maintenance requises au cours de l'exploitation, mais également une approche délicate pour les opérations d'assemblages desdits composants (1) pour former une structure de grande dimension (l'enceinte du réacteur), compte tenu des énormes forces électromagnétiques en jeu dans un réacteur notamment de fusion thermonucléaire.

Selon d'autre mode de réalisation, les éléments élémentaires (4) constituant le composant (1) sont à géométrie identique.

Selon d'autres caractéristiques de l'invention, les éléments élémentaires (4) ont des géométries diverse et/ou multiple avec une taille d'au moins 1/100 de la taille du composant (1), mais ladite taille étant toutefois inférieure à 1/10 de la taille du composant (1).

Avantageusement, chaque élément élémentaire (4) comprend au moins un moyen (5) destiné à l'écoulement d'un fluide et/ou au transport de l'écoulement de pression et/ou à l'échange de l'énergie au travers d'une paroi. Ce moyen (5) est intégré dans chaque élément élémentaire lors de l'assemblage par diffusion assisté par compression isostatique (étape 1), puis finalisé lors de l'assemblage des éléments élémentaires (étape 2).

Avantageusement, chaque élément élémentaire (4) comprend au moins un circuit hydraulique et au moins un moyen d'obturation. Dans le cas d'une géométrie diverse ou multiple, les éléments élémentaires ont des formes différentes, notamment des géométries qui s'imbrique facilement. C'est le cas par exemple d'un pavage.

Eventuellement, le composant (1) peut comprendre en outre un moyen support comprenant au moins un moyen de canalisation et au moins un moyen d'interconnexion, ledit moyen support étant soudé aux éléments élémentaires (4). Ce moyen support permet d'interconnecter plusieurs circuits hydrauliques des éléments élémentaires (4).

Dans le cas d'un réacteur de fusion de type torique, la première paroi est composée d'une pluralité des composants (1) selon l'invention. Chaque composant (1) a une géométrie adapté de manière à s'être fixé facilement à une structure poloïdale ou toroïdale ou torocylindrique, qui constitue l'armature structurelle de chaque panneau de première paroi, à travers laquelle circule l'eau de refroidissement. En fonction de leur position à l'intérieur de la chambre à vide du réacteur, ces composants (1) sont soumis à différents flux thermiques pouvant atteindre quelque mégawatt.

Le composant (1) selon l'invention est conçu principalement pour supporter des flux thermiques pouvant atteindre au moins 1 MW/m², notamment des flux thermiques de l'ordre de 7 MW/m².

Particulièrement, le procédé d'assemblage des composants (1) à géométrique variable selon l'invention comprend les étapes successives suivantes :
- dans un premier temps, une structure (6), d'au moins 1 m², munie d'un empilement comprenant une multiplicité de couches (3) de matériaux incluant au moins une couche de béryllium (2) est coupée en une multiplicité d'éléments élémentaires (4) de plus petite taille d'au moins 1/100 de la taille de ladite structure (6). Dans certains cas, lesdits éléments (4) peuvent être traités individuellement. Chaque élément élémentaire (4) peut comprendre des moyens de canalisation, des moyens hydrauliques, des moyens de refroidissement et bien d'autres moyens, utiles pour le refroidissement du réacteur.
- dans un deuxième temps, lesdits éléments élémentaires (4) sont réunis côte à côte pour définir une géométrie choisie. La géométrie est choisie en fonction de la destination, notamment de la nature du réacteur.
- Troisièmement, il est procédé à un assemblage suivant un procédé de soudage par diffusion atomique desdits éléments élémentaires (4) suivant la géométrique choisie pour former un composant (1) de taille considérable.

Le procédé à trois étapes peut être rallongé ou modifié en incluant d'autres étapes et/ou un test d'étanchéité. Ce test d'étanchéité peut être réalisé après le procédé de soudage par diffusion atomique des éléments élémentaires (4).

Une autre étape peut être ajoutée au procédé précédemment décrit. Il s'agit de souder les éléments élémentaires avec un moyen support. Ce moyen support peut être une boite à eau usinée dans un bloc en acier austénitique.

Selon d'autres caractéristiques de l'invention, au moins un obturateur est soudé à au moins un moyen support par soudage, par une électrode de tungstène et un gaz plasmagène inerte avec ou sans métal d'apport ou par laser pulsé ou continu ou par faisceau d'électron. Le moyen support peut être une boîte à eau munie d'au moins un moyen de canalisation et/ou de circulation de l'eau.

Avantageusement, les éléments élémentaires (4) sont assemblés de façon permanente par un soudage diffusion assisté par compression isostatique à chaud.

Les éléments élémentaires peuvent être usinés pour leur donner une forme choisie pour créer les connexions entre les moyens (5) destinés à l'écoulement d'un fluide et/ou au transport de l'écoulement de pression et/ou à l'échange de l'énergie au travers d'une paroi, lesquels permettront à un fluide par exemple d'être véhiculer dans chaque élément élémentaire (4) et de le refroidir.

Le dispositif selon l'invention présente l'avantage d'offrir des possibilités de mieux contrôler les risques d'assemblage des composants (1) pour obtenir une structure de grande dimension répondant à la géométrie complexe et aux spécifications des réacteurs, notamment de fusion thermonucléaire et à la complexité de fabrication de tel composant (1).

On voit donc qu'il est possible de réaliser de façon industrielle un composant (1) de première paroi d'un réacteur, notamment de fusion thermonucléaire, fiable capable de supporter des flux thermiques pouvant atteindre au moins 1 MW/m².

Contrairement aux préjugés qui consistaient à croire qu'il est impossible de concevoir un composant pour des réacteurs de fusion pouvant supporter de forts flux thermiques variables et de fort flux de particules de grande énergie pouvant atteindre d'au moins 1 MW/m², l'invention présentée ci-dessus permet de montrer qu'en fabriquant un composant (1) décrit selon l'invention, il est possible de résoudre le problème objet de la présente invention.

La présente invention n'est nullement limitée aux modes de réalisation décrits et représentés, mais l'homme du métier saura y apporter toute variante conforme à l'étendue des revendications jointes.

## Revendications

1. Composant (1) pour une structure de grande dimension, notamment pour un réacteur de fusion thermonucléaire, destiné à être soumis à une multiplicité de flux thermiques et/ou un flux de particules de grande énergie, pouvant atteindre quelque mégawatt par mètre carré, notamment au moins 0,5 MW/m² ou 1 MW/m², et à supporter une multiplicité de contraintes mécaniques et/ou thermiques, **caractérisé en ce que** ledit composant (1) est principalement constitué par un assemblage d'une multiplicité d'éléments élémentaires (4) de plus petite taille d'au moins 1/100 de la taille dudit composant (1), assemblés entre eux par soudage diffusion, chaque élément élémentaire (4) étant muni d'un empilement comprenant une multiplicité de couches (3) de matériaux incluant au moins une couche de béryllium (2).

2. Composant (1) selon la revendication 1 **caractérisé en ce que** les éléments élémentaires (4) ont une taille comprise entre 1/100 et 1/10 de la taille du composant (1).

3. Composant (1) selon la revendication 1 ou 2 **caractérisé en ce que** l'empilement comprend une couche de matériau en alliage de cuivre, une couche de matériaux en acier austénitique, un circuit de refroidissement, intercalaire métallique constituée d'un métal de transition mou et ductile sur lequel un intercalaire en nickel est disposé.

4. Composant (1) selon l'une quelconque des revendications précédentes **caractérisée en ce que** les éléments élémentaires (4) sont à géométrie sensiblement identique ou diverse et/ou multiple.

5. Composant (1) selon l'une quelconque des revendications précédentes **caractérisé en ce qu'**au moins un élément élémentaire (4) comprend au moins un moyen (5) destiné à l'écoulement d'un fluide et/ou au transport de l'écoulement de pression et/ou à l'échange de l'énergie au travers une paroi.

6. Composant (1) selon l'une quelconque des revendications précédentes, dans lequel au moins un élément élémentaire (4) comprend au moins un circuit hydraulique et au moins un moyen d'obturation.

7. Composant (1) selon l'une quelconque des revendications précédentes **caractérisé en ce qu'**il comprend en outre au moins un moyen support comprenant au moins un moyen de canalisation et au moins un moyen d'interconnexion, ledit moyen support étant soudé aux éléments élémentaires (4).

8. Procédé d'assemblage d'un composant (1) pour une structure de grande dimension, notamment pour un réacteur de fusion thermonucléaire selon l'une quelconque des revendications précédentes, **caractérisé en ce qu'**il comprend les étapes successives suivantes :
- découper une structure (6) d'une surface d'au moins 1 m² munie d'un empilement comprenant une multiplicité de couches (3) de matériaux incluant au moins une couche de béryllium (2) en une multiplicité d'éléments élémentaires (4) de plus petite taille d'au moins 1/100 de la taille de ladite structure (6),
- réunir lesdits éléments élémentaires (4) côte à côte pour définir une géométrie choisie,
- assembler entre eux par soudage par diffusion lesdits éléments élémentaires (4) suivant la géométrique choisie pour former un composant (1) de taille inférieure ou égale à la taille de la structure (6).

9. Procédé d'assemblage d'un composant (1) selon la revendication 8 **caractérisé en ce qu'**il comprend en outre une étape consistant à pré-assembler les couches de matériaux (3) de l'empilement par soudage diffusion de sorte à former des liaisons entre les couches de matériaux (3) dudit l'empilement.

10. Procédé d'assemblage d'un composant (1) selon l'une quelconque des revendications 8 à 9 dans lequel un test d'étanchéité est réalisé après le procédé de soudage diffusion des éléments élémentaires (4), et une reprise d'usinage suivi d'un nettoyage est également réalisé.

11. Procédé d'assemblage d'un composant (1) selon l'une quelconque des revendications 8 à 10 dans lequel les éléments élémentaires sont usinés de façon à leur donner une forme choisie pour créer des connexions entre les moyens (5), lesquelles permettront à un fluide d'être véhiculer dans chaque élément élémentaire (4).

12. Procédé d'assemblage d'un composant (1) selon l'une quelconque des revendications 8 à 11 **caractérisé en ce qu'**il comprend une étape supplémentaire consistant à l'assemblage d'au moins une couche de béryllium.

13. Réacteur, notamment de fusion thermonucléaire comprenant une couverture en matériaux, ladite couverture comprend une multiplicité de composants (1) selon l'une quelconque des revendications 1 à 7.

## Patentansprüche

1. Komponente (1) für eine Struktur von großer Dimension, insbesondere für einen thermonuklearen Fusionsreaktor, die dazu bestimmt ist, einer Vielzahl von Wärmeströmen und/oder einem Teilchenstrom mit großer Energie ausgesetzt zu sein, die einige Megawatt pro Quadratmeter, insbesondere mindestens 0,5 MW/m² oder 1 MW/m², erreichen kann, und eine Vielzahl von mechanischen und/oder thermischen Spannungen zu ertragen, **dadurch gekennzeichnet, dass** die Komponente (1) hauptsächlich von einem Zusammenbau einer Vielzahl von elementaren Elementen (4) von kleinerer Größe von mindestens 1/100 der Größe der Komponente (1) gebildet ist, die miteinander durch Diffusionsschweißen verbunden sind, wobei jedes elementare Element (4) mit einem Stapel versehen ist, der eine Vielzahl von Materialschichten (3), einschließlich mindestens einer Berylliumschicht (2) umfasst.

2. Komponente (1) nach Anspruch 1, **dadurch gekennzeichnet, dass** die elementaren Elemente (4) eine Größe zwischen 1/100 und 1/10 der Größe der Komponente (1) haben.

3. Komponente (1) nach Anspruch 1 oder 2, **dadurch gekennzeichnet, dass** der Stapel eine Materialschicht aus Kupferlegierung, eine Materialschicht aus austenitischem Stahl, einen Kühlkreislauf, eine metallische Zwischenschicht, die aus einem weichen und duktilen Übergangsmetall gebildet ist, auf dem eine Zwischenschicht aus Nickel angeordnet ist, umfasst.

4. Komponente (1) nach einem der vorhergehenden Ansprüche, **dadurch gekennzeichnet, dass** die elementaren Elemente (4) eine im Wesentlichen identische oder diverse und/oder multiple Geometrie aufweisen.

5. Komponente (1) nach einem der vorhergehenden Ansprüche, **dadurch gekennzeichnet, dass** mindestens ein elementares Element (4) mindestens ein Mittel (5) umfasst, das für den Abfluss eines Fluids und/oder den Transport des Druckabflusses und/oder für den Austausch der Energie über eine Wand bestimmt ist.

6. Komponente (1) nach einem der vorhergehenden Ansprüche, bei der mindestens ein elementares Element (4) mindestens eine Hydraulikschaltung und mindestens ein Verschlussmittel umfasst.

7. Komponente (1) nach einem der vorhergehenden Ansprüche, **dadurch gekennzeichnet, dass** sie ferner mindestens ein Tragmittel umfasst, umfassend mindestens ein Kanalisationsmittel und mindestens ein Verbindungsmittel, wobei das Tragmittel an die elementaren Elemente (4) geschweißt ist.

8. Verfahren zum Zusammenbau einer Komponente (1) für eine Struktur von großer Dimension, insbesondere für einen thermonuklearen Fusionsreaktor, nach einem der vorhergehenden Ansprüche, **dadurch gekennzeichnet, dass** es die folgenden Schritte nacheinander umfasst:
- Schneiden einer Struktur (6) mit einer Fläche von mindestens 1 m², die mit einem Stapel versehen ist, der eine Vielzahl von Materialschichten (3), einschließlich mindestens einer Berylliumschicht (2) umfasst, in eine Vielzahl von elementaren Elementen (4) von kleinerer Größe von mindestens 1/100 der Größe der Struktur (6),
- Verbinden der elementaren Elemente (4) Seite an Seite, um eine ausgewählte Geometrie zu definieren,
- Zusammenfügen der elementaren Elemente (4) durch Diffusionsschweißen nach der ausgewählten Geometrie, um eine Komponente (1) von kleinerer oder gleicher Größe wie die Größe der Struktur (6) zu bilden.

9. Verfahren zum Zusammenbau einer Komponente (1) nach Anspruch 8, **dadurch gekennzeichnet, dass** es ferner einen Schritt umfasst, der daraus besteht, die Materialschichten (3) des Stapels durch Diffusionsschweißen vorab zusammenzubauen, um Verbindungen zwischen den Materialschichten (3) des Stapels zu bilden.

10. Verfahren zum Zusammenbau einer Komponente (1) nach einem der Ansprüche 8 bis 9, bei dem ein Dichtigkeitstest nach dem Diffusionsschweißverfahren der elementaren Elemente (4) durchgeführt wird, und eine Wiederaufnahme einer Bearbeitung, gefolgt von einer Reinigung, ebenfalls erfolgt.

11. Verfahren zum Zusammenbau einer Komponente (1) nach einem der Ansprüche 8 bis 10, bei dem die elementaren Elemente bearbeitet werden, um ihnen eine ausgewählte Form zu verleihen, um Anschlüsse zwischen den Mitteln (5) zu erzeugen, die es einem Fluid ermöglichen sollen, in jedem elementaren Element (4) befördert zu werden.

12. Verfahren zum Zusammenbau einer Komponente (1) nach einem der Ansprüche 8 bis 11, **dadurch gekennzeichnet, dass** es einen zusätzlichen Schritt umfasst, bestehend aus der Montage mindestens einer Berylliumschicht.

13. Reaktor, insbesondere thermonuklearer Fusionsreaktor, umfassend eine Materialabdeckung, wobei die Abdeckung eine Vielzahl von Komponenten (1) nach einem der Ansprüche 1 bis 7 umfasst.

## Claims

1. Component (1) for a large size structure, in particular for a thermonuclear fusion reactor, intended to be subjected to a multiplicity of heat flows and/or flows of high-energy particles, which could reach a few Megawatts per square metre, in particular at least 0.5MW/m² or 1MW/m², and to support a multiplicity of mechanical and/or heat stresses, **characterised in that** said component (1) is mainly constituted of an assembly of a multiplicity of basic elements (4) of a smaller size of at least 1/100 of the size of said component (1), assembled to each other by diffusion welding, each basic element (4) being equipped with a stack comprising a multiplicity of layers (3) of materials including at least one beryllium layer (2).

2. Component (1) according to claim 1, **characterised in that** the basic elements (4) have a size of between 1/100 and 1/10 of the size of the component (1).

3. Component (1) according to claim 1 or 2, **characterised in that** the stack comprises a layer of copper alloy material, a layer of austenitic steel materials, a cooling circuit, a metal divider constituted of a soft and malleable transition metal, whereon a nickel divider is arranged.

4. Component (1) according to any one of the preceding claims, **characterised in that** the basic elements (4) have a substantially identical or diverse and/or multiple geometry.

5. Component (1) according to any one of the preceding claims, **characterised in that** at least one basic element (4) comprises at least one means (5) intended for the flow of a fluid and/or for the transportation of the pressure flow and/or for the exchange of energy through a wall.

6. Component (1) according to any one of the preceding claims, wherein at least one basic element (4) comprises at least one hydraulic circuit and at least one closing means.

7. Component (1) according to any one of the preceding claims, **characterised in that** it further comprises at least one support means, comprising at least one pipe means and at least one interconnection means, said support means being welded to the basic elements (4).

8. Method for assembling a component (1) for a large size structure, in particular for a thermonuclear fusion reactor, according to any one of the preceding claims, **characterised in that** it comprises the following successive steps:
- cutting a structure (6) of a surface from at least 1m² equipped with a stack comprising a multiplicity of layers (3) of materials including at least one beryllium layer (2) in a multiplicity of basic elements (4) of a smaller size of at least 1/100 of the size of said structure (6),
- grouping said basic elements (4) next to each other to define a chosen geometry,
- assembling said basic element (4) to each other by diffusion welding, according to the chosen geometry, to form a component (1) of a size, smaller than or equal to the size of the structure (6).

9. Method for assembling a component (1) according to claim 8, **characterised in that** it further comprises a step consisting of pre-assembling the layers of materials (3) of the stack by diffusion welding, so as to form the connections between the layers of materials (3) of said stack.

10. Method for assembling a component (1) according to any one of claims 8 to 9, wherein a watertight test is carried out after the method for the diffusion welding of the basic elements (4), and re-machining followed by cleaning is also carried out.

11. Method for assembling a component (1) according to any one of claims 8 to 10, wherein the basic elements are machined so as to give them a chosen form to create connections between the means (5), which will enable a fluid to be transmitted into each basic element (4).

12. Method for assembling a component (1) according to any one of claims 8 to 11, **characterised in that** it comprises an additional step consisting of assembling at least one beryllium layer.

13. Reactor, in particular, a thermonuclear fusion reactor, comprising a material cover, said cover comprising a multiplicity of components (1) according to any one of claims 1 to 7.
